# EUROPÄISCHE PATENTANMELDUNG

(11) **EP 1 748 567 A2**
(43) Veröffentlichungstag der Anmeldung: **31.01.2007**
(21) Anmeldenummer: 06117772.1
(22) Anmeldetag: 25.07.2006
(51) Int. Cl.: H04B 1/16, H04B 7/08

(54) **Funkwellen-Empfangseinrichtung**

(30) Priorität: 27.07.2005 DE 102005035096
(71) Anmelder: ROBERT BOSCH GMBH, 70442 Stuttgart (DE)
(72) Erfinder: Kottschlag, Gerhard, 31139, Hildesheim (DE); Krawinkel, Bernward, 31139, Hildesheim/Sorsum (DE); Passoke, Jens, 30966, Hemmingen (DE)

(57) **Zusammenfassung**

Eine Funkwellen-Empfangseinrichtung mit mindestens einer Vorstufeneinzeit (1, 2, 3) zur Selektion von ausgewählten Frequenzbändern aus einem Funkwellen-Empfangssignal und mit mindestens zwei Empfangseinheiten (E1, E2) sieht vor, dass die mindestens eine Vorstufeneinheit (1, 2, 3) wahlweise auf mindestens eine von mehreren Empfangseinheiten (E1, E2) aufschaltbar ist.

## Beschreibung

### Funkwellen-Empfangseinrichtung

Die Erfindung betrifft eine Funkwellen-Empfangseinrichtung mit mindestens einer Vorstufeneinheit zur Selektion von ausgewählten Frequenzbändern auf einem Funkwellen-Empfangssignal und mit mindestens zwei Empfangseinheiten.

Funkwellen-Empfangseinrichtungen sind beispielsweise als Rundfunkempfänger hinreichend bekannt. Beispielsweise können zur Ermöglichung eines Hintergrundempfangs oder des Empfangs unterschiedlicher Frequenzbänder mehrere Empfänger in einer Funkwellen-Empfangseinrichtung vorgesehen sein.

Die Empfänger haben jeweils eine für ein definiertes Empfangsfrequenzband ausgelegte Vorstufe mit Bandpassfilter und zumeist einen Vorverstärker sowie zumeist mindestens einen mit einem Oszillator angesteuerten Mischer am Ausgang der Vorstufe. Dabei können die Filter sowie auch die Verstärker mehrstufig aufgebaut sein. Ebenso kann eine dieser Stufen, wie z.B. eine erste Verstärkerstufe gemeinsam für die verschiedenen Empfangspfade genutzt werden.

Vorteilhaft kann dabei sein, eines der Filter der verschiedenen Pfade bzgl. seines Empfangsbandes umschaltbar zu gestalten. Empfangssysteme, die u. a. für den Rundfunkempfang unterhalb etwa 30 MHz ausgelegt sind, haben häufig eine breitbandige Vorstufe, deren Selektion eventuell in Teilbänder unterteilt ist. Die Aufteilung kann beispielsweise in Langwellen- (LW), Mittelwellen- (MW) und zwei Kurzwellen- (KW) Frequenzbänder erfolgen, wobei die beiden Kurzwellen-Frequenzbänder oberhalb und unterhalb einer Zwischenfrequenz von z. B. 10,7 MHz liegen können. Hierzu kann die Vorstufe so ausgebildet sein, dass diese die gesamten Teilfrequenzbänder empfängt, verstärkt und diese Teilfrequenzbänder bei zu hohem Pegel in der Verstärkung geregelt werden. Optional kann auch eine schmalbandigere Selektion einzelner Empfangsfrequenzbänder in der Vorstufe erfolgen. Dann werden bei Mehrfachempfängern diese Vorstufen entsprechend mehrfach vorgehalten und dem jeweiligen Mischer fest zugeordnet.

So ist in der DE 197 23 175 A1 ein Empfänger für unterschiedliche Frequenzbänder beschrieben, bei dem das Antennensignal mit einem Diplexer auf zwei Vorverstärker für zwei Empfangseinheiten aufgeteilt wird. Die Vorverstärker sind an jeweils einen zugeordneten Mischer einer
Empfangseinheit fest angeschlossen. Somit mischt jeweils ein Mischer ein fest zugeordnetes Empfangsband auf eine gemeinsame ZF, wobei der nachfolgende Signalpfad nur einmal vorgesehen ist, so dass zeitgleich nur ein Signal aus einem der Bänder empfangen werden kann.

Weiterhin ist aus der DE 43 35 616 A1 eine Satellitenempfangsanlage bekannt, bei der das empfangene Signal frequenzselektiv in zwei Frequenzzweige aufgespalten und jeweils einem Konverterzweig für ein Frequenzband zugeführt wird.

Ausgehend hiervon ist es Aufgabe der vorliegenden Erfindung eine verbesserte Funkwellen-Empfangseinrichtung zu schaffen, die insbesondere einfacher und kostengünstiger ist.

Die Aufgabe wird mit der gattungsgemäßen Funkwellen-Empfangseinrichtung dadurch gelöst, dass die mindestens eine Vorstufeneinheit wahlweise auf mindestens eine von mehreren Empfangseinheiten aufschaltbar ist.

Damit kann der durch die Vorstufeneinheit realisierte Teil des Signalpfades für den Empfang von zwei oder mehr Empfangskanälen gleichzeitig genutzt werden, so dass zwei oder mehr Empfangseinheiten gleichzeitig zwei oder mehr Empfangskanäle beispielsweise aus dem LW-, MW- und KW-Frequenzbereich bereitstehen. Auf diese Weise können z. B.

Empfangssignale des analog übertragenen amplitudenmodulierten Rundfunks sowie auch Empfangssignale mit Informationen gemäß digitaler Standards, wie z.B. DRM (Digital Radio Mondiale) oder hybride Modulationen, wie IBOC (In-Band on Chanel) empfangen werden.

Die mindestens eine der Vorstufeneinheiten ist vorzugsweise für den Empfang von mehr als einem ausgewählten Empfangsfrequenzband vorgesehen. Beispielsweise ist eine Vorstufeneinheit für den Empfang sowohl des LW-, als auch des MW-Frequenzbereiches ausgebildet.

Vorzugsweise sind mindestens zwei der Vorstufeneinheiten für den
Empfang von jeweils einem spezifischen Empfangsfrequenzband vorgesehen, so dass eine Vorstufeneinheit beispielsweise das LW- und MW-Frequenzband und eine andere Vorstufeneinheit ein KW-Frequenzband bereitstellt. Dabei sind die Vorstufeneinheiten wahlweise auf eine oder mehrere Empfangseinheiten aufschaltbar, so dass hierdurch eine Flexibilität des Empfangs der Frequenzbänder sichergestellt wird und mehrere Empfangskanäle in einem gemeinsamen Frequenzband gleichzeitig
empfangen werden können.

Von Vorteil ist es, wenn für das KW-Frequenzband zwei Vorstufeneinheiten vorgesehen werden, von denen eine für den Empfang unterhalb und die andere für den Empfang oberhalb der ZF Frequenz von z.B. 10,7 MHz ausgelegt ist. Alternativ können diese Vorstufen auch als eine Vorstufe mit in der Frequenz umschaltbarer Selektion realisiert werden.

Die Empfangseinheiten haben vorzugsweise eine Steuereinheit zur automatischen Verstärkungsregelung, mit der ein Element zur Regelung des Signalpegels mindestens einer auswählbaren Vorstufeneinheit angesteuert werden kann. Diese Regelung umfasst unter Umständen auch eine Verringerung der Verstärkung bis in den Bereich einer negativen Vorstufenverstärkung, also einer Dämpfung, was nachfolgend in den Erläuterungen zur Verstärkungsregelung mit eingeschlossen sein soll. Diese automatische Steuerungseinheit zur Verstärkungsregelung kann beispielsweise in den integrierten Schaltkreis einer Empfangseinheit mit implementiert sein. Damit kann in Abhängigkeit von dem eingestellten Empfangskanal der Empfangseinheit die zugehörige automatische Verstärkungs-Steuerungseinheit benutzt werden, um diejenigen Vorstufeneinheiten zu regeln, deren Empfangsfrequenzband den Empfangskanal der Empfangseinheit umfasst.

Vorzugsweise stellen die Vorstufeneinheiten Hochfrequenz-Ausgangssignale in voneinander unterschiedlichen Frequenzbändern bereit. Dann ist die automatische Verstärkungs-Steuerungseinheit jeweils einer Empfangseinheit zur Steuerung der Signalpegel der von dieser Empfangseinheit gemeinsam genutzten Vorstufeneinheiten für ein Frequenzband vorgesehen.

Wird die selbe Vorstufeneinheit von zwei Empfangseinheiten gleichzeitig genutzt, so reicht die Steuerung durch eine einzige automatische Steuerungseinheit zur Verstärkungsregelung eines der Empfänger aus.

Die Vorstufeneinheiten können Dämpfungselemente zur Steuerung des Signalpegels haben. Dabei können die Dämpfungselemente von mindestens zwei zur Steuerung zugeordneten Vorstufeneinheiten gleichstrommäßig in Serie geschaltet sein, so dass ein Ansteuerstrom einer automatischen Verstärkungs-Steuerungseinheit durch diese Dämpfungselemente geführt wird.

Optional können die Dämpfungselemente von mindestens zwei zur Steuerung zugeordneten Vorstufeneinheiten gleichstrommäßig parallel geschaltet sein, so dass ein Ansteuerstrom einer automatischen Verstärkungs-Steuerungseinheit auf diese Dämpfungselemente aufgeteilt wird.

Die Reihenschaltung der Dämpfungselemente hat den Vorteil, dass ein geringerer Ansteuerstrom erforderlich ist. Die Parallelschaltung hat hingegen den Vorteil, dass eine geringere Ansteuerungsspannung erforderlich ist, als bei der Serienschaltung der Dämpfungselemente. Welcher der Vorteile überwiegt, hängt von der jeweils konkreten Implementierung einer Funkwellen-Empfangseinrichtung ab.

Die Erfindung wird nachfolgend anhand der beigefügten Zeichnungen beispielhaft näher erläutert. Es zeigen:
Figur 1 - Blockdiagramm einer Ausführungsform der Funkwellen-Empfangseinrichtung;
Figur 2 - Schaltbild einer Funkwellen-Empfangseinrichtung nach Figur 1 mit gleichstrommäßig in Reihe geschalteten Dämpfungselementen;
Figur 3 - Schaltbild einer Funkwellen-Empfangseinrichtung mit gleichstrommäßig parallel geschalteten Dämpfungselementen.

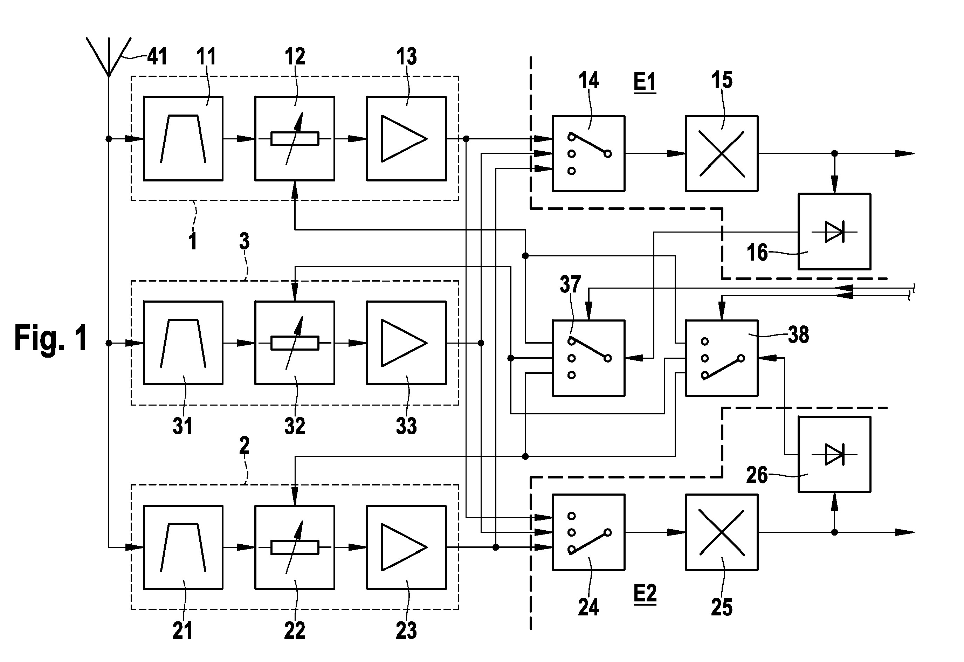

Die Figur 1 lässt ein Blockdiagramm einer Funkwellen-Empfangseinrichtung für den gleichzeitigen Empfang von zwei Empfangskanälen aus dem Langwellen-, Mittelwellen- und Kurzwellen-Frequenzband erkennen, d. h. für Rundfunkfrequenzen im Frequenzbereich von 153 kHz bis 26,5 MHz. Hierzu ist die Vorstufe des Doppelempfängers in drei Signalpfade aufgeteilt und hat eine erste Vorstufeneinheit 1 für das LW- und MW-Empfangsfrequenzband, eine zweite Vorstufeneinheit 2 für das KW-Empfangsfrequenzband unterhalb einer Frequenz von 10 MHz sowie eine dritte Vorstufeneinheit 3 für das KW-Empfangsfrequenzband oberhalb von 11 MHz. Die Signalpfade der Vorstufeneinheiten 1, 2, 3 bestehen jeweils aus einer Hintereinanderschaltung eines Bandfilters 11, 21, 31, eines Dämpfungselements 12, 22, 32 zur Regelung des Signalpegels sowie eines Vorverstärkers 13, 23, 33. Der Ausgang der Vorverstärker 13, 23, 33 bildet den Ausgang der Vorstufeneinheiten 1, 2, 3, die mit einem ersten und einem zweiten Schalter 14, 24 verbunden sind. Jeder Schalter 14, 24 ist auf der anderen Seite mit einem zugeordneten Mischer 15, 25 einer Empfangseinheit E1, E2 verbunden, so dass die Signalpfade der Vorstufeneinheiten 1, 2, 3 wahlweise auf die Eingänge der beiden Empfangseinheiten E1, E2 aufgeteilt werden können.

Hierdurch kann eine erste Empfangseinheit E1 genutzt werden, um ein Audiosignal wiederzugeben, während eine zweite Empfangseinheit E2 im Hintergrund das gleiche oder ein anderes Empfangsfrequenzband nach weiteren Signalen guter Empfangsqualität absucht und entsprechende Frequenzen abspeichert oder Informationen aus diesen Signalen zur weiteren Nutzung extrahiert. Dabei können Signale digitaler und / oder analoger Modulation empfangen werden. So können beispielsweise ein digital oder analog moduliertes Audiosignal auf einem Kanal und ein anderes analog oder digital moduliertes Signal auf einem zweiten Kanal empfangen werden. Diese Daten können beispielsweise Verkehrsinformationsdaten TMC, RDS-Daten (Radio Data System) etc. sein.

Bei der wahlweisen Nutzung und ggf. mehrfachen Nutzung einer Vorstufeneinheit 1, 2, 3 durch mehrere Empfangseinheiten E1, E2 tritt das
Problem der Verstärkungsregelung der einzelnen Signalpfade auf. Dies wird vorliegend gelöst, indem automatische Verstärkungs-Steuerungseinheiten 16, 26 der Empfangseinheiten E1, E2 mit den Dämpfungselementen 12, 22, 32 ausgewählter Vorstufeneinheiten 1, 2, 3 verbunden sind.

In dem dargestellten Ausführungsbeispiel ist die automatische Verstärkungs-Steuerungseinheit 16 der ersten Empfangseinheit E1 fest mit der
Dämpfungseinheit 12 der ersten Vorstufeneinheit 1 verbunden. Entsprechend ist die automatische Verstärkungs-Steuerungseinheit 26 der zweiten Empfangseinheit E2 fest mit der Dämpfungseinheit 22 der zweiten Vorstufeneinheit 2 verbunden. Mit einem Schalter 37 können die erste automatische Verstärkungs-Steuerungseinheit 16 der ersten Empfangseinheit E1 oder die zweite automatische Verstärkungs-Steuerungseinheit 26 der zweiten Empfangseinheit E2 wahlweise auf die Dämpfungseinheit 32 der dritten Vorstufeneinheit 3 geschaltet werden. Der Schalter 37 wird hierbei von einem Steuerungsprozessor (nicht dargestellt) der Funkwellen-Empfangseinrichtung in Abhängigkeit davon betätigt, welche Empfangsfrequenzen und Empfangspfade eingestellt sind.

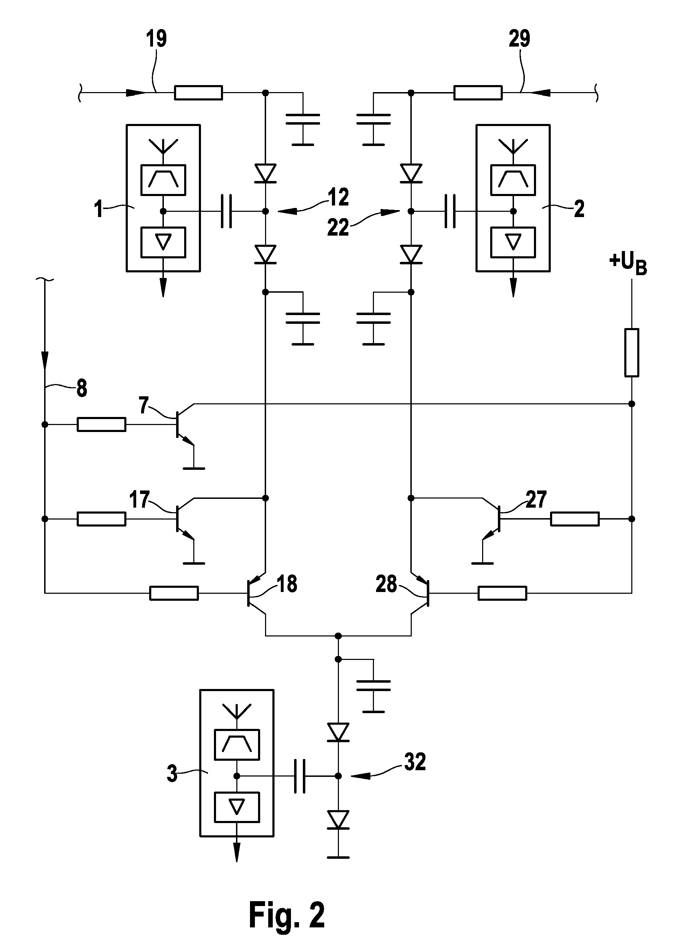

Die Figur 2 lässt ein Beispiel für ein Schaltbild einer Funkwellen-Empfangseinrichtung aus Figur 1 erkennen. Dabei werden die Vorstufeneinheiten 1, 2, 3 jeweils durch eine Doppeldiodenschaltung bedämpft, deren Verbindungspunkt über eine Kapazität an eine Verbindung des Bandpassfilters mit dem Vorverstärker angeschlossen ist. Ein von der automatischen Verstärkungs-Steuerungseinheit 16 erzeugter Gleichstrom 19 und entsprechend ein von der automatischen Verstärkungs-Steuerungseinheit 26 erzeugter Gleichstrom 29 lässt die jeweiligen Doppeldioden des Dämpfungselementes 12, 22 niederohmig werden, so dass ein Teil der Hochfrequenzenergie über die Kondensatoren nach Masse abgeführt wird.

In entsprechender Weise ist ein Dämpfungselement 32 für die dritte Vorstufeneinheit 3 mit Doppeldiode und Kapazitäten vorgesehen.

Das Dämpfungselement 32 der dritten Vorstufe 3 kann wahlweise in Reihe mit dem Dämpfungselement 12 der ersten Vorstufeneinheit 1 oder dem Dämpfungselement 22 der zweiten Vorstufeneinheit 2 gleichstrommäßig in Reihe geschaltet werden, so dass der Ansteuer-Gleichstrom 19, 29 die in Reihe geschalteten Dämpfungselemente 32 und 12 oder 22 nacheinander durchfließt.

Wenn ein Transistor 17 durch ein Schaltsignal 8 gesperrt ist, so ist der mit dem gleichen Signal angesteuerte Transistor 18 leitend und der Ansteuer-Gleichstrom 19 fließt nicht nur durch die Dioden der ersten Vorstufeneinheit 1, sondern regelt ebenfalls die zweite Vorstufeneinheit 3. Ist hingegen der Transistor 17 leitend und der Transistor 18 gesperrt, so wird der Ansteuer-Gleichstrom 19 von dem Transistor 17 nach Masse abgeführt und erreicht nicht mehr die Vorstufeneinheit 3.

Die Transistoren 27 und 28 steuern in entsprechender Weise, ob der zweite Ansteuer-Gleichstrom 29 der zweiten Empfangseinheit E2 nur die zweite Vorstufeneinheit 2 oder auch zusätzlich die dritte Vorstufeneinheit 3 bedämpft. Der Transistor 7 ist als Inverter geschaltet und sorgt dafür, dass die beiden Ansteuer-Gleichstrompfade 19, 29 durch das Schaltsignal 8 immer gegenphasig geschaltet werden, so dass nur einer der Ströme die Vorstufeneinheit 3 erreichen kann.

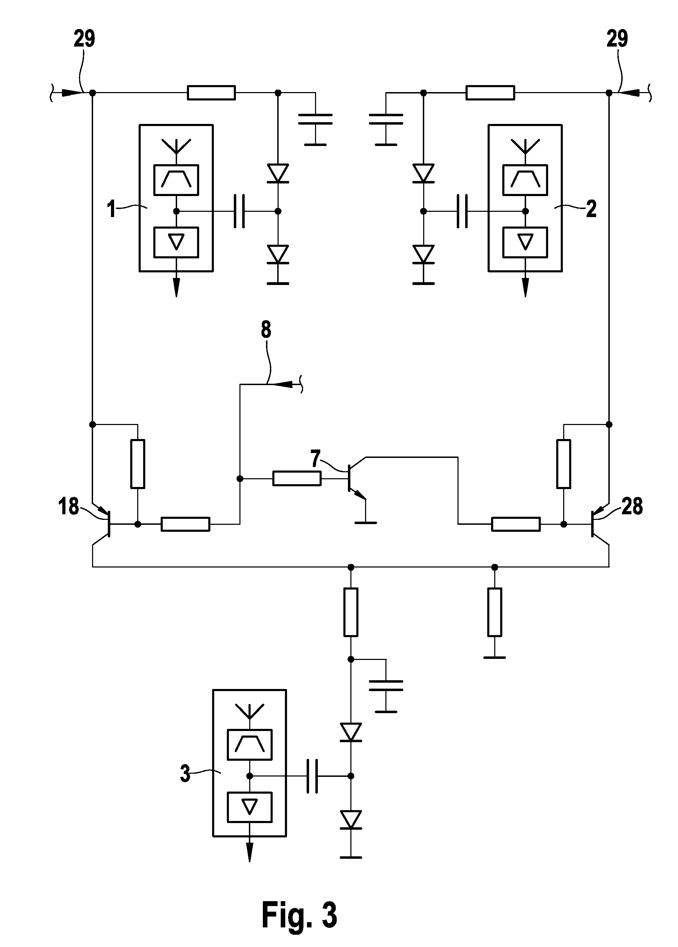

Die Figur 3 lässt ein mögliches Schaltbild einer Funkwellen-Empfangseinrichtung aus Figur 1 erkennen, bei der die Dämpfungselemente 12, 22, 32 wahlweise gleichstrommäßig parallel geschaltet werden können. Hierdurch können die Ansteuer-Gleichströme 19, 29 der automatischen Verstärkungs-Steuerungseinheiten 16, 26 gegebenenfalls aufgeteilt und somit zur Bedämpfung von einer oder zwei Vorstufeneinheiten genutzt werden.

Die Vorstufeneinheit 3 wird hierbei wahlweise mit dem Ansteuer-Gleichstrom 19 oder 29 versorgt. Hierzu müssen allerdings die automatischen Verstärkungs-Steuerungseinheiten 16, 26 in der Lage sein, je nach Beschaltung einen doppelt so großen Ansteuer-Gleichstrom 19, 29 zu liefern, ohne dass es zu Rückwirkungen auf die einfache Nutzung der automatischen Verstärkungs-Steuerungseinheit kommt.

Die Parallelschaltung wird durch das Schaltsignal 8 gesteuert, die die Transistoren 7, 18 und 28 ansteuern. Wiederum ist der Transistor 7 als Inverter geschaltet und sorgt dafür, dass die beiden Ansteuer-Gleichstrompfade 19, 29 durch das Schaltsignal 8 immer gegenphasig geschaltet werden, so dass nur einer der Ansteuer-Gleichströme 19, 29 die Vorstufeneinheit 3 erreichen kann.

## Patentansprüche

1. Funkwellen-Empfangseinrichtung mit mindestens einer Vorstufeneinheit (1, 2, 3) zur Selektion von ausgewählten Frequenzbändern aus einem Funkwellen-Empfangssignal und mit mindestens zwei Empfangseinheiten (E1, E2), **dadurch gekennzeichnet, dass** die mindestens eine Vorstufeneinheit (1, 2, 3) wahlweise auf mindestens eine von mehreren Empfangseinheiten (E1, E2) aufschaltbar ist.

2. Funkwellen-Empfangseinrichtung nach Anspruch 1, **dadurch gekennzeichnet, dass** mindestens eine der Vorstufeneinheiten (1, 2, 3) für den Empfang von mehr als einem ausgewählten Empfangsfrequenzband vorgesehen ist.

3. Funkwellen-Empfangseinrichtung nach Anspruch 1 oder 2, **dadurch gekennzeichnet, dass** mindestens zwei der Vorstufeneinheiten (1, 2, 3) für den Empfang von jeweils einem spezifischen Empfangsfrequenzband vorgesehen sind und dass die Vorstufeneinheiten (1, 2, 3) wahlweise auf eine oder mehrere Empfangseinheiten (E1, E2) aufschaltbar sind.

4. Funkwellen-Empfangseinrichtung nach einem der vorhergehenden Ansprüche **dadurch gekennzeichnet, dass** mindestens eine der Vorstufeneinheiten oder ein Teil von dieser bezüglich der Grenzfrequenzen der Selektionseigenschaften umschaltbar oder steuerbar ist.

5. Funkwellen-Empfangseinrichtung nach einem der vorhergehenden Ansprüche, **dadurch gekennzeichnet, dass** die Funkwellen-Empfangseinrichtung mindestens eine Vorstufeneinheit (1, 2, 3) hat, die für den Empfang von mehr als einem ausgewählten Empfangsfrequenzband vorgesehen und gleichzeitig auf mindestens zwei Empfangseinheiten (E1, E2) aufschaltbar ist.

6. Funkwellen-Empfangseinrichtung nach einem der vorhergehenden Ansprüche, **dadurch gekennzeichnet, dass** Empfangseinheiten (E1, E2) eine automatische Verstärkungs-Steuerungseinheit (16, 26) zur Steuerung des Signalpegels mindestens einer auswählbaren Vorstufeneinheit (1, 2, 3) hat.

7. Funkwellen-Empfangseinrichtung nach Anspruch 6, **dadurch gekennzeichnet, dass** die Vorstufeneinheiten (1, 2, 3) Hochfrequenz-Ausgangssignale in voneinander unterschiedlichen Frequenzbändern bereitstellen und die automatische Verstärkungs-Steuerungseinheit (16, 26) jeweils einer Empfangseinheit (E1, E2) zur Steuerung der Signalpegel der von der Empfangseinheit (E1, E2) gemeinsam genutzten mindestens einen Vorstufeneinheit (1, 2, 3) für ein Frequenzband genutzt wird.

8. Funkwellen-Empfangseinrichtung nach einem der vorhergehenden Ansprüche, **dadurch gekennzeichnet, dass** eine gemeinsame Vorstufeneinheit (1, 2, 3) für Langwellen- (LW) und Mittelwellen- (MW) Rundfunksignale und mindestens eine Vorstufeneinheit für Kurzwellen- (KW) Rundfunksignale vorgesehen ist.

9. Funkwellen-Empfangseinrichtung nach einem der vorhergehenden Ansprüche, **dadurch gekennzeichnet, dass** die Vorstufeneinheiten (1, 2, 3) Dämpfungselemente (12, 22, 32) zur Steuerung des Signalpegels haben und die Dämpfungselemente (12, 22, 32) von mindestens zwei zur Steuerung zugeordneten Vorstufeneinheiten (1, 2, 3) gleichstrommäßig in Serie geschaltet sind, so dass ein Ansteuerstrom einer automatischen Verstärkungs-Steuerungseinheit (16, 26) durch diese Dämpfungselemente (12, 22, 32) geführt wird.

10. Funkwellen-Empfangseinrichtung nach einem der Ansprüche 1 bis 8, **dadurch gekennzeichnet, dass** die Vorstufeneinheiten (1, 2, 3) Dämpfungselemente (12, 22, 32) zur Steuerung des Signalpegels haben und die Dämpfungselemente (12, 22, 32) von mindestens zwei zur Steuerung zugeordneten Vorstufeneinheiten (1, 2, 3) gleichstrommäßig parallel geschaltet sind, so dass ein Ansteuerstrom einer automatischen Verstärkungs-Steuerungseinheit (16, 26) auf diese Dämpfungselemente (12, 22, 32) aufgeteilt wird.

11. Funkwellen-Empfangseinrichtung nach einem der vorhergehenden Ansprüche **dadurch gekennzeichnet, dass** den Vorstufeneinheiten (1, 2, 3) ein gemeinsames Verstärkerelement vorgeschaltet ist.

12. Funkwellen-Empfangseinrichtung nach Anspruch 11 **dadurch gekennzeichnet, dass** der vorgeschaltete gemeinsame Teil des Signalpfades in der Verstärkung geregelt wird und die Ansteuerung durch die nachfolgenden Einheiten zur automatischen Verstärkungsregelung erfolgt.
